# DEMANDE DE BREVET EUROPEEN

(11) **EP 2 843 879 A1**
(43) Date de publication de la demande: **04.03.2015**
(21) Numéro de dépôt: 13306199.4
(22) Date de dépôt: 03.09.2013
(51) Int. Cl.: H04L 12/28

(54) **Configuration d'un réseau domotique**

(71) Demandeur: HAGER CONTROLS (Société par Actions Simplifiée), 67700 Saverne (FR)
(72) Inventeur: Magneron, Jean-Philippe, 67370 Truchtersheim (FR)
(74) Mandataire: Nuss, Laurent

(57) **Abrégé**

La présente invention a pour objet un procédé de configuration d'une installation domotique faite d'un ensemble d'équipements (1) reliés en un réseau domotique (2), comprenant une étape de paramétrage (101) dudit réseau (2). Ce procédé est caractérisé en ce qu'il comprend
- une étape de premier échange d'informations entre l'installation domotique et une première base de données (3) située dans un réseau extérieur (5), ainsi que
- une étape de deuxième échange d'informations entre la première base (3) et une deuxième base de données (3') constructeur, située dans le réseau extérieur (5).

L'invention a aussi pour objet un dispositif pour la mise en oeuvre du procédé.

## Description

La présente invention relève du domaine des installations domotiques, et a pour objet, d'une part, un procédé de configuration particulier, et, d'autre part, un dispositif domotique particulier contrôlé conformément à ce procédé.

Une installation domotique comprend un ensemble d'appareils reliés en un réseau virtuel, où circule de l'information sous forme de signal de détection en provenance d'un détecteur, type détecteur de luminosité ou de température extérieure, ou sous forme de signal de commande à destination d'un actionneur, type moteur de volet roulant ou température de consigne de chauffage, ou autre forme d'information. Le fonctionnement de ces différents appareils doit donc être paramétré, ce qui revient donc à configurer chacun d'eux pour construire le réseau d'information domotique lui-même.

Dans ce domaine, on connaît FR2823587 qui concerne le paramétrage d'un dispositif de commande unidirectionnel, passant en mode de configuration lors de la détection d'une énergie modulée. Une fois que le fonctionnement du dispositif de commande a été choisi, il est enregistré au sein même du dispositif de commande.

FR2899004 divulgue un procédé de configuration d'une installation domotique qui peut se faire soit à partir d'une centrale fixe, avec laquelle communiquent les éléments du réseau, soit à partir d'un clavier mobile pouvant communiquer avec les différents éléments une fois à proximité, ainsi qu'avec la centrale fixe. Une fois le paramétrage effectué pour les différents éléments du réseau, celui-ci est sauvegardé dans la centrale elle-même, éventuellement suite à une transmission des informations de configuration de la part du clavier mobile.

La configuration du réseau elle-même ainsi que la sauvegarde des données de configuration se font donc sur site, à l'aide des éléments physiquement présents dans les locaux, ce qui présente toutefois divers inconvénients. En effet, lorsque les données de configuration sont sauvegardées dans la mémoire d'un appareil trop facilement déplaçable, comme une télécommande, clé USB ou autres, ce dernier peut se perdre et l'accès aux données sauvegardées devient donc impossible, toute modification ou nouvelle configuration devant alors bien souvent se faire en entier.

De plus, la configuration sur site nécessite, pour l'installateur, de se déplacer, alors qu'elle pourrait, dans certains cas, se faire sans accès physique ou visuel et donc à distance.

En outre, l'installation domotique peut être amenée à évoluer : rajout d'appareils supplémentaires, suppression de certains autres, utilisation de nouvelles versions, etc. La configuration de l'installation domotique mise à jour peut alors être très délicate lorsque l'installateur qui doit s'en charger n'a pas accès aux données de configuration initiale. Ces données peuvent en effet être stockées ou protégées par le premier installateur. Le paramétrage d'une installation domotique mise à jour par le rajout d'un composant récent gagnerait aussi à être simplifié.

Enfin, les données utilisées lors du paramétrage du réseau ne sont pas toujours les dernières versions, en particulier lorsque ce paramétrage s'effectue à l'occasion du rajout d'un appareil. Les capacités des équipements, nouveaux ou déjà présents, ne sont donc pas toujours optimisées.

La présente invention a pour but de pallier au moins une partie et préférentiellement tous ces inconvénients en proposant essentiellement d'aménager un échange de données entre une première base de données externe à l'installation, et, d'une part, le réseau domotique via une interface de configuration, et, d'autre part, une deuxième base de données contenant des données de configuration mises à jour.

A cet effet, l'invention a tout d'abord pour objet un procédé de configuration d'une installation domotique faite d'un ensemble d'équipements formant un réseau domotique, comprenant une étape de paramétrage dudit réseau au cours de laquelle sont définis le fonctionnement et les interactions entre les différents équipements. Ce procédé est **caractérisé en ce qu'il** comprend
- une étape de premier échange d'informations entre l'installation domotique et une première base de données située dans un réseau extérieur à l'installation domotique et avec lequel cette dernière communique, ainsi que
- une étape de deuxième échange d'informations entre la première base et une deuxième base de données, située dans le réseau
extérieur, pour y récupérer les versions les plus récentes des données pour le paramétrage, et enrichir et actualiser ainsi la première base de données.

L'invention a aussi pour objet un dispositif de configuration d'une installation domotique faite d'un ensemble d'équipements formant un réseau domotique, pour la mise en oeuvre d'un tel procédé. Ce dispositif de configuration est **caractérisé en ce qu'il** comprend une interface de configuration, pour communiquer avec les équipements de l'installation domotique lors du paramétrage, une première base de données située dans un réseau extérieur à l'installation domotique et avec lequel cette dernière communique, une deuxième base de données, située dans le réseau extérieur, l'interface de configuration et la première base de données étant arrangées pour communiquer des informations entre elles, la première base de données et la deuxième base de données étant arrangées pour communiquer des informations entre elles.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

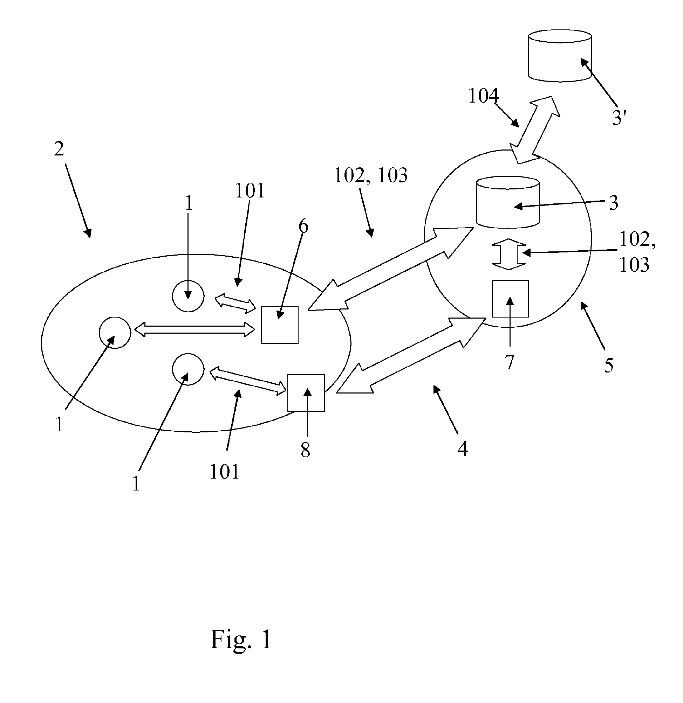

- la figure 1 montre les interactions entre les différents éléments du dispositif de configuration ;

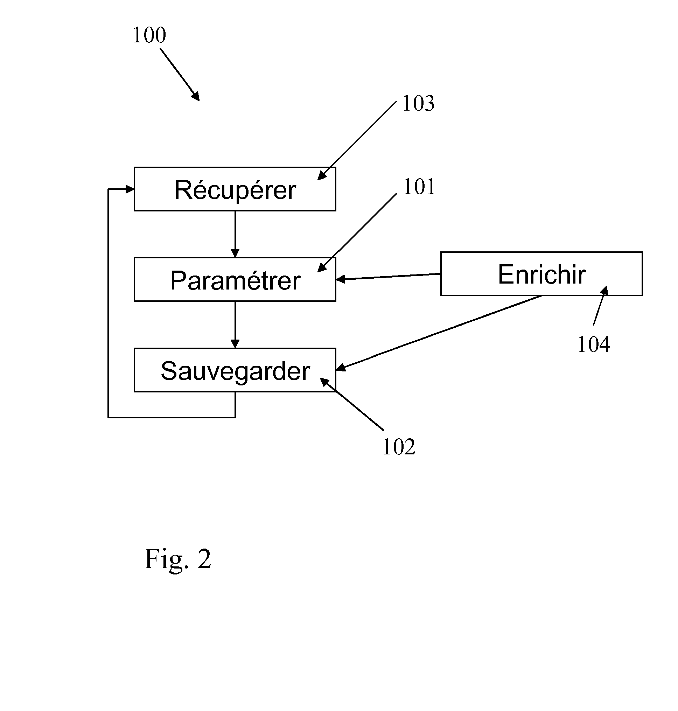

- la figure 2 illustre un enchaînement possible des étapes du procédé, et
- la figure 3 illustre des échanges d'information possibles.

L'invention a donc pour objet un procédé de configuration 100 d'une installation domotique faite d'un ensemble d'équipements 1 formant un réseau domotique 2, comprenant une étape de paramétrage 101 dudit réseau 2 au cours de laquelle sont définis le fonctionnement et les interactions entre les différents équipements 1. Les différents équipements 1 peuvent bien entendu être aptes à communiquer avec ou sans fil, pour échanger de l'information entre eux dans le réseau ou avec l'extérieur.

Dans l'étape de paramétrage 101, c'est donc bien le réseau domotique 2 qui est construit, en définissant notamment les comportements attendus pour chaque équipement 1, suite aux différents évènements possibles et informations circulant dans le réseau.

Ce paramétrage 101 peut être effectué par un installeur se trouvant dans les locaux où sont placés les différents équipements 1, en réglant successivement chaque équipement 1 puis leurs modes d'interaction. L'installateur peut aussi se trouver hors des locaux et faire le paramétrage 101 de manière déportée, comme il sera encore décrit plus loin. Selon l'invention, le procédé comprend
- une étape de premier échange d'informations entre l'installation domotique et une première base de données 3 située dans un réseau extérieur 5 à l'installation domotique et avec lequel cette dernière communique, ainsi que
- une étape de deuxième échange d'informations entre la première base 3 et une deuxième base de données 3', située dans le réseau extérieur 5, pour y récupérer les versions les plus récentes des données pour le paramétrage 101, et enrichir et actualiser 104 ainsi la première base de données 3.

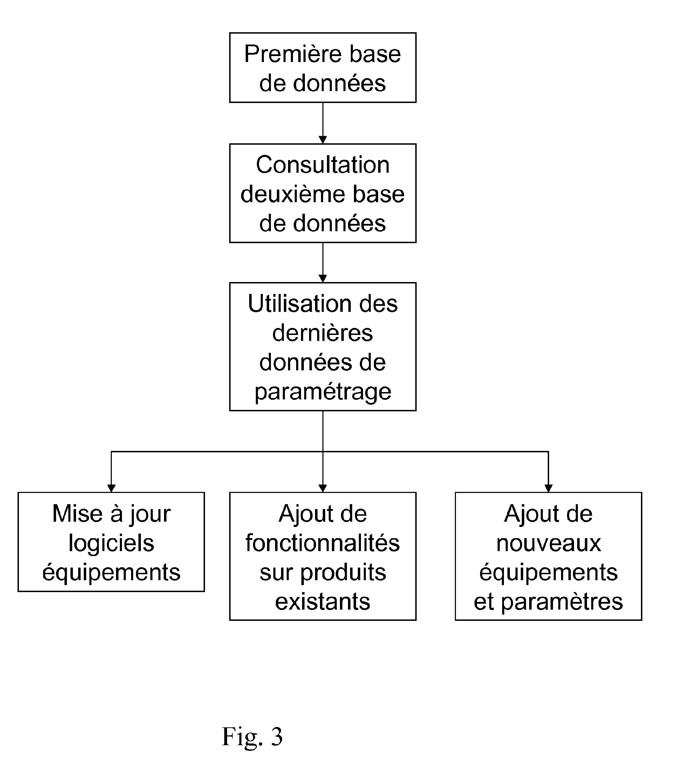

Lors du premier échange d'informations, la première base 3 est consultée afin d'y recueillir les données relatives à un ou chaque équipement 1 de l'installation domotique en vue du paramétrage 101 du réseau domotique 2. Ces données peuvent être des données de réglage, des informations, des programmes, etc, voir figure 3.

La première base 3 contient préférentiellement des données relatives à des équipements 1 provenant de différents constructeurs d'équipement 1. La première base 3 peut être sous le contrôle d'un prestataire externe, par exemple. Lors de la consultation des données qu'elle contient, et dans le but de faire le paramétrage 101, les informations nécessaires à la construction d'un réseau domotique 2 concernant ses équipements 1 constitutifs sont rapatriées. Il se peut toutefois que les données contenues dans une telle première base de données 3 partagée ne soient pas les dernières données ou les plus performantes.

Ainsi, le procédé de configuration 100 envisage de rafraichir le contenu de la première base de données 3 lors d'une étape de deuxième échange d'informations, qui se déroule alors entre, d'une part, la première base de données 3, et, d'autre part, la deuxième base de données 3'. Une deuxième base 3' est préférentiellement contrôlée et maintenue par un seul constructeur d'équipements 1 et contient les dernières données disponibles pour les différents équipements 1 possibles, en particulier les dernières versions des logiciels. Lorsque la première base de donnée 3 est consultée pour qu'un paramétrage 101 soit effectué, une étape de rafraichissement est donc mise en oeuvre, lors de laquelle les données qu'elle contient sont mises à jour, grâce à celles contenues dans la deuxième base de données 3', contrôlée et tenue à jour par le constructeur.

Le deuxième échange d'informations peut être provoqué par différents évènements : toute connexion à la première base de données 3, l'identification d'un équipement 1 pour lequel tout ou partie des informations manque dans la première base de données 3, l'identification d'un équipement 1 ancien lors du paramétrage, etc. En outre, la première base de données 3 est préférentiellement accessible sur le réseau Internet.

La première base de données 3 utilise préférentiellement des comptes d'utilisateur. Un compte peut ainsi correspondre à un installateur particulier, et donner ainsi accès à des données relatives à plusieurs réseaux domotiques 2 ou installations différents qu'il a sous sa responsabilité, ou encore être relative à une seule installation, voire relative à un constructeur d'équipement 1.

Ainsi, dans le procédé, l'échange d'information se fait avec une succession de base de données, à savoir la première base de données 3, utilisée pour configurer le réseau domotique 2, et la au moins une deuxième base de données 3', utilisée pour enrichir et actualiser 104 la première. La configuration du réseau domotique 2 se fait à l'aide de la première base de données 3, accessible sur l'Internet, commune à plusieurs constructeurs d'équipement 1, stockant des informations relatives aux équipements possibles 1, ainsi qu'éventuellement aussi relatives à la configuration de plusieurs réseaux domotiques 2. La deuxième base de données 3', quant à elle, est sous contrôle d'un constructeur d'équipement 1 à chaque fois et contient les données les plus récentes pour les équipements 1 de ce constructeur.

La première base de données 3 peut bien évidemment échanger de l'information avec plusieurs deuxièmes bases de données 3' différentes, chacune étant contrôlée par un seul fabricant d'équipements 1, dont elle mémorise les données. Les deuxièmes bases de données 3' sont elles aussi préférentiellement situées dans le réseau Internet.

La figure 3 précise des échanges d'information possibles entre les deux bases de données, en particulier la nature des informations qui circulent : logiciels, fonctionnalités, paramètres, équipements 1, etc.

Dans des modes de réalisation particuliers, le premier échange d'informations provoque le deuxième échange d'informations. Ainsi, chaque fois que des informations sont récupérées dans la première base de données 3 pour effectuer le paramétrage du réseau domotique 2, des informations sont collectées dans la deuxième base de données 3' pour rafraîchir et actualiser 104 le contenu de la première base de données 3. Comme il a déjà été précisé, la première base de données 3 peut être capable de communiquer avec plusieurs autres deuxièmes bases de données 3', chacune propre à un constructeur d'équipements 1. Lors du deuxième échange d'information, la première base de données 3 peut donc récolter des données depuis une ou plusieurs deuxièmes bases de données 3', en fonction des équipements 1 dont des données mises à jour doivent être récupérées, intégrées dans la première base de données 3 et utilisées ensuite pour paramétrer le réseau domotique 2.

Le premier échange d'information entre l'installation domotique et la première base de données 3 peut être dans l'un ou l'autre des deux sens possibles : des données relatives aux équipements 1 peuvent être envoyées depuis la première base de données 3, et des données relatives à la configuration du réseau domotique 2 peuvent aussi être envoyées vers la première base de données 3 à des fins de sauvegarde. Par conséquent, de telles données de sauvegarde peuvent être extraites de la première base de données 3, en particulier dans un but de mise à jour, de diagnostic, ou encore de modification rapide, de la configuration du réseau domotique 2.

Comme il a déjà été précisé, le réseau domotique 2 est paramétré 101 sur la base des informations, données, logiciels, sauvegardes, et autres, contenus dans la première base de données 3. Ainsi, lors du premier échange d'information entre l'installation domotique et la première base de données 3, des données sont récupérées 102 depuis la première base de données 3 en vue du paramétrage 101 du réseau domotique 2. Les données enregistrées dans la première base de données 3 peuvent être relatives aux différents équipements 1 possibles, ou encore être des données de configuration relatives à un réseau domotique 2 particulier, déjà enregistrées. Dans ce cas, la première base de données 3 sert de lieu de stockage et de sauvegarde de la configuration d'un réseau domotique 2 particulier.

Selon une caractéristique additionnelle possible, le deuxième échange d'informations est provoqué en cas de requête pour récupérer 102 des informations de la première base de données 3 en vue d'un paramétrage 101, de sorte que le paramétrage 101 du réseau domotique 2 se fait ensuite avec les données les plus récentes extraites depuis la deuxième base 3' et fournies à la première base 3. Ainsi, selon cette caractéristique, la mise à jour du contenu de la première base de données 3 se fait dès que des données en sont récupérées 102 dans le but de paramétrer 101 un réseau domotique 2.

Par exemple, lorsque des données de configuration d'un réseau domotique 2, sauvegardées dans la première base 3, sont récupérées, les équipements 1 du réseau domotique 2 sont identifiés, puis les dernières données qui y sont relatives sont cherchées dans la ou les deuxièmes bases de données 3' correspondantes.

Lors du paramétrage 101, les données relatives aux équipements 1 du réseau domotique 2 sont recherchées dans la première base de données 3. Un échange d'information entre la première base de données 3 et la deuxième base de données 3' peut alors être prévu s'il s'avère qu'au moins un des équipements 1 du réseau domotique 2 à paramétrer 101 est inconnu dans la première base de données 3, ou simplement trop ancien, ou encore que son paramétrage actuel se base sur des informations obsolètes par rapport à celles mémorisées dans la première base de données 3. Dans ce cas, les données nécessaires à la prise en compte d'un tel équipement 1 dans un réseau domotique 2 sont récupérées depuis la deuxième base de données 3' et utilisées pour le paramétrage 101. Ces données sont avantageusement aussi conservées dans la première base de données 3 dans le but de l'enrichir par des données de nouveaux équipements 1 encore non renseignés.

Selon une caractéristique additionnelle possible déjà évoquée, lors du premier échange d'informations entre l'installation domotique et la première base de données 3, des données de paramétrage du réseau domotique 2 sont envoyées à la première base de données 3 pour une sauvegarde 103, dans ladite base, du paramétrage du réseau domotique 2 de l'installation domotique. La première base de données 3 sert donc aussi à la sauvegarde des données de configuration du réseau domotique 2. En cas de besoin, il est donc très simple de rappeler et réutiliser une configuration antérieure qui a fait ses preuves. Un tel mode de sauvegarde sur une première base de données 3 déportée, placée en ligne sur un réseau Internet, garantit en outre l'accessibilité des données, puisqu'elles ne sont alors plus stockées sur un support physique perdable, type clé USB, voire sur un support qui n'existe qu'en un seul exemplaire, et qui n'est donc pas forcément à disposition au moment voulu.

La première base de données 3 sert donc à sauvegarder des données relatives à des équipements 1, mais aussi des données relatives à des réseaux domotiques 2 particuliers. Des comptes d'accès peuvent alors être prévus, comme déjà évoqué.

Différents évènements peuvent provoquer la sauvegarde 103 des données de configuration dans la première base de données 3. La validation d'une configuration définie peut provoquer la sauvegarde 103, la modification de la configuration du réseau domotique 2, une instruction dédiée à la sauvegarde, etc. Dans des modes de réalisation particuliers, la sauvegarde 103 est effectuée à chaque connexion de l'installation domotique à la première base de données 3, c'est-à-dire à chaque premier échange d'informations. Une sauvegarde des versions successives est bien sûr envisageable, de sorte à conserver une traçabilité de l'évolution de la configuration du réseau domotique 2.

L'invention a aussi pour objet un dispositif mettant en oeuvre le procédé tel que décrit ci-dessus. Il s'agit d'un dispositif de configuration 4 d'une installation domotique faite d'un ensemble d'équipements 1 formant un réseau domotique 2, pour mettre en oeuvre le procédé ci-dessus.

Ce dispositif comprend
une interface de configuration, pour communiquer avec les équipements 1 de l'installation domotique lors du paramétrage 101,
une première base de données 3 située dans un réseau extérieur 5 à l'installation domotique et avec lequel cette dernière communique,
une deuxième base de données 3', située dans le réseau extérieur 5,
l'interface de configuration et la première base de données 3 étant arrangées pour communiquer des informations entre elles,
la première base de données 3 et la deuxième base de données 3' étant arrangées pour communiquer des informations entre elles.

L'interface de configuration permet donc de configurer le réseau domotique 2, et peut donc au moins interagir avec chacun des équipements 1 de l'installation. L'interface de configuration communique avec la première base de données 3 pour y récupérer des données qui peuvent être relatives aux équipements 1 ou encore relatives à des éventuelles données de configuration du réseau domotique 2 lui-même. La communication peut aussi consister à envoyer des données à la première base de données 3, en particulier pour y sauvegarder 103 la configuration définie pour le réseau domotique 2.

Dans ce dispositif, la première base de données 3 et la deuxième base de données 3' peuvent échanger de l'information, en particulier des informations de configuration, relatives aux équipements 1, envoyées depuis la deuxième base 3' vers la première base 3. De nouveaux équipements 1 peuvent ainsi être mémorisés dans la première base 3, ou des données relatives à des équipements 1 déjà connus sont mises à jour.

La première base de données 3 se situe préférentiellement dans le réseau Internet, et est aisément accessible. La deuxième base de données 3' est préférentiellement gérée et contrôlée par un constructeur d'équipements 1, qui y stocke alors les données relatives à sa gamme d'équipements 1. La première base de données 3 peut coopérer avec plusieurs deuxièmes bases de données 3', chacune étant gérée par un seul constructeur d'équipement 1.

Selon une caractéristique additionnelle possible, l'interface de configuration comprend une interface de configuration locale 6 connectée dans le réseau domotique 2, temporairement ou définitivement, notamment une interface de configuration 6 communicant sans fil directement avec les équipements 1, et apte à communiquer avec le réseau extérieur 5 dans lequel se trouve au moins la première la base de données 3. La communication entre l'interface de configuration locale 6 et les équipements 1 peut se faire avec ou sans fil.

L'interface de configuration locale 6 peut être une centrale domotique pourvue de moyens de programmation. Une telle interface de configuration locale 6 peut aussi être sous la forme d'un appareil mobile communicant, qui peut être dédié à cette fonction de paramétrage 101 ou qui peut être un appareil communicant type téléphone, ordinateur léger, exécutant une tâche logicielle correspondante.

Ainsi, dans certains modes de réalisation, l'interface de configuration locale 6 prend essentiellement la forme d'une tâche logicielle installée sur un appareil communicant existant, capable de communiquer avec le réseau domotique 2 de l'installation et avec le réseau extérieur 5, en particulier un téléphone portable, un ordinateur ou autres.

Selon une caractéristique additionnelle possible, l'interface de configuration comprend une interface de configuration déportée 7, hors du réseau domotique 2, connectée dans le réseau extérieur 5 dans lequel se trouve la première base de données 3, et apte à communiquer avec le réseau domotique 2 de l'installation domotique à travers une passerelle 8 adaptée, cette dernière se trouvant préférentiellement au sein du réseau domotique 2. Grâce à une telle interface de configuration déportée 7, il devient possible de paramétrer le réseau domotique 2 même sans être à proximité des équipements 1 qui constituent ledit réseau. Une configuration à distance est donc possible, en utilisant par exemple un ordinateur connecté au réseau Internet, et ainsi capable de communiquer avec la passerelle 8, cette dernière formant l'interface entre le réseau domotique 2 privé, et un réseau extérieur 5 dans lequel est connectée l'interface de configuration déportée 7.

Dans des modes de réalisation particuliers, l'interface de configuration déportée 7 prend essentiellement la forme d'une tâche logicielle installée sur un appareil relié au réseau extérieur 5, tel qu'un ordinateur. L'ordinateur est alors connecté dans le réseau extérieur 5, et comprend un programme lui permettant de réaliser la configuration du réseau domotique 2. Il peut alors aussi prendre en charge la communication avec la première base de données 3, pour y récupérer des données via le réseau extérieur 5 Internet, et/ou pour y envoyer des données de sauvegarde de la configuration effectuée pour le réseau domotique 2 ou autre échange.

Bien entendu, l'invention n'est pas limitée au mode de réalisation décrit et représenté aux dessins annexés. Des modifications restent possibles, notamment du point de vue de la constitution des divers éléments, par combinaison différente de tout ou partie des caractéristiques définies ci-dessus, ou par substitution d'équivalents techniques, sans sortir pour autant du domaine de protection de l'invention.

## Revendications

1. Procédé de configuration (100) d'une installation domotique faite d'un ensemble d'équipements (1) formant un réseau domotique (2), comprenant une étape de paramétrage (101) dudit réseau (2) au cours de laquelle sont définis le fonctionnement et les interactions entre les différents équipements (1), procédé **caractérisé en ce que**
il comprend
- une étape de premier échange d'informations entre l'installation domotique et une première base de données (3) située dans un réseau extérieur (5) à l'installation domotique et avec lequel cette dernière communique, ainsi que
- une étape de deuxième échange d'informations entre la première base (3) et une deuxième base de données (3'), située dans le réseau extérieur (5), pour y récupérer les versions les plus récentes des données pour le paramétrage (101), et enrichir et actualiser (104) ainsi la première base de données (3).

2. Procédé selon la revendication 1, **caractérisé en ce que**
le premier échange d'informations provoque le deuxième échange d'information.

3. Procédé selon l'une quelconque des revendications 1 ou 2, **caractérisé en ce que**
lors du premier échange d'information entre l'installation domotique et la première base de données (3), des données sont récupérées (102) depuis la première base de données (3) en vue du paramétrage (101) du réseau domotique (2).

4. Procédé selon la revendication 2 et selon la revendication 3, **caractérisé en ce que**
le deuxième échange d'informations est provoqué en cas de requête pour récupérer (102) des informations de la première base de données (3) en vue d'un paramétrage (101).

5. Procédé selon l'une quelconque des revendications 1 à 4, **caractérisé en ce que**
lors du premier échange d'informations entre l'installation domotique et la première base de données (3), des données de paramétrage du réseau domotique (2) sont envoyées à la première base de données (3) pour une sauvegarde (103), dans ladite base, du paramétrage du réseau domotique (2) de l'installation domotique.

6. Procédé selon la revendication 5, **caractérisé en ce que**
la sauvegarde (103) est effectuée à chaque connexion de l'installation domotique à la première base de données (3).

7. Dispositif de configuration (4) d'une installation domotique faite d'un ensemble d'équipements (1) formant un réseau domotique (2), pour la mise en oeuvre du procédé selon l'une quelconque des revendications 1 à 6, dispositif **caractérisé en ce qu'il** comprend
une interface de configuration, pour communiquer avec les équipements (1) de l'installation domotique lors du paramétrage (101),
une première base de données (3) située dans un réseau extérieur (5) à l'installation domotique et avec lequel cette dernière communique,
une deuxième base de données (3'), située dans le réseau extérieur (5),
l'interface de configuration et la première base de données (3) étant arrangées pour communiquer des informations entre elles,
la première base de données (3) et la deuxième base de données (3') étant arrangées pour communiquer des informations entre elles.

8. Dispositif de configuration (4) selon la revendication 7, **caractérisé en ce que**
l'interface de configuration comprend une interface de configuration locale (6) connectée dans le réseau domotique (2), temporairement ou définitivement.

9. Dispositif de configuration (4) selon la revendication 7, **caractérisé en ce que**
l'interface de configuration locale (6) prend essentiellement la forme d'une tâche logicielle installée sur un appareil communicant existant, capable de communiquer avec le réseau domotique (2) de l'installation et avec le réseau extérieur (5).

10. Dispositif de configuration (4) selon l'une quelconque des revendications 7 à 9, **caractérisé en ce que**
l'interface de configuration comprend une interface de configuration déportée (7), hors du réseau domotique (2), connectée dans le réseau extérieur (5) dans lequel se trouve la première base de données (3), et apte à communiquer avec le réseau domotique (2) de l'installation domotique à travers une passerelle (8) adaptée.

11. Dispositif de configuration (4) selon la revendication 10, **caractérisé en ce que**
l'interface de configuration déportée (7) prend essentiellement la forme d'une tâche logicielle installée sur un appareil relié au réseau extérieur (5).
